# EUROPEAN PATENT APPLICATION

(11) **EP 4 685 613 A1**
(43) Date of publication of application: **28.01.2026**
(21) Application number: 24190999.3
(22) Date of filing: 25.07.2024
(51) Int. Cl.: G06F 3/01, G06N 7/02

(54) **ERRONEOUS HAND ACTION PREVENTION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method for providing real-time feedback to a user performing a task, the method comprising: receiving hand-tracking data of a user performing a task in an environment, wherein the user's hand interacts with at least one object; hierarchically classifying, using a fuzzy logic rule-based system, at least one hand gesture and/or hand position within a predefined area of the environment; based on the classified at least one hand gesture and/or hand position, determining feedback for transmission to the user.

## Description

### TECHNICAL FIELD

Embodiments of the present invention described herein relate to methods and systems for providing feedback to a user performing a task involving hand interaction with objects, such as an installation or maintenance task, in a physical and/or virtual environment.

### BACKGROUND

Training specialized workers represents a considerable overhead in any business. In addition, the increasing complexity and number of variants in underlying technologies is complicating the process of ensuring that the workforce is permanently up-to-date and knowledgeable on every technology and product involved in the services companies provide.

When specialized workers perform a task, such as an installation or maintenance task, they can be audited using a hand-tracking software to assess the success of the task being undertaken. This auditing process typically uses machine learning (ML) approaches which requires large amounts of labelled data to create reliable ML models. Furthermore, even reliable ML models can only rely on what the labelled data shows so, for example,, if a scenario is not covered by the dataset, then the ML model is unable to learn what to do in those situations.

Therefore, there is a challenge to address manual task completion without the need for computationally expensive processes.

The examples described herein are not limited to examples which solve problems mentioned in this background section.

### SUMMARY

The present disclosure addresses the above problem of how to effectively provide feedback to a user undertaking a manual task without the need for computationally expensive processes.

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a computer-implemented method of providing real-time feedback to a user performing a task, the method comprising: receiving hand-tracking data of a user performing a task in an environment, wherein the user's hand interacts with at least one object; hierarchically classifying, using a fuzzy logic rule-based system, at least one hand gesture and/or hand position within a predefined area of the environment; based on the classified at least one hand gesture and/or hand position, determining feedback for transmission to the user.

In some examples of the computer-implemented method, the environment is a physical environment.

In some examples of the computer-implemented method, the environment is a virtual environment.

In some examples of the computer-implemented method, the environment is a combination of a physical environment and a virtual environment.

In some examples of the computer-implemented method, the predefined area of the environment is user-defined.

In some examples of the computer-implemented method, the predefined area of the environment is defined using Computer Vision.

In some examples of the computer-implemented method, the object is a physical object.

In some examples of the computer-implemented method, the object is a virtual object.

In some examples of the computer-implemented method, wherein determined feedback is transmitted to the user visually, haptically and/or audibly.

In some examples of the computer-implemented method, wherein the hand-tracking data is output by a hand-tracking system comprising an optical sensor.

According to a second aspect, there is a computer system including a processor and memory storing computer program code for performing the steps of: receiving hand-tracking data of a user performing a task in an environment, wherein the user's hand interacts with at least one object; hierarchically classifying, using a fuzzy logic rule-based system, at least one hand gesture and/or hand position within a predefined area of the environment; based on the classified at least one hand gesture and/or hand position, determining feedback for transmission to the user.

In some examples of the computer system, the environment is a physical environment.

In some examples of the computer system, the environment is a virtual environment.

In some examples of the computer system, the environment is a combination of a physical environment and a virtual environment.

In some examples of the computer system, the predefined area of the environment is user-defined.

In some examples of the computer system, the predefined area of the environment is defined using Computer Vision.

In some examples of the computer system, the object is a physical object.

In some examples of the computer system, the object is a virtual object.

In some examples of the computer system, wherein determined feedback is transmitted to the user visually, haptically and/or audibly.

In some examples of the computer system, wherein the hand-tracking data is output by a hand-tracking system comprising an optical sensor.

According to a third aspect, there is a computer program element comprising computer program code to, when loaded into a computer system and executed thereon, cause the computer to perform the steps: receiving hand-tracking data of a user performing a task in an environment, wherein the user's hand interacts with at least one object; hierarchically classifying, using a fuzzy logic rule-based system, at least one hand gesture and/or hand position within a predefined area of the environment; based on the classified at least one hand gesture and/or hand position, determining feedback for transmission to the user.

In some examples of the computer program element, the environment is a physical environment.

In some examples of the computer program element, the environment is a virtual environment.

In some examples of the computer program element, the environment is a combination of a physical environment and a virtual environment.

In some examples of the computer program element, the predefined area of the environment is user-defined.

In some examples of the computer program element, the predefined area of the environment is defined using Computer Vision.

In some examples of the computer program element, the object is a physical object.

In some examples of the computer program element, the object is a virtual object.

In some examples of the computer program element, wherein determined feedback is transmitted to the user visually, haptically and/or audibly.

In some examples of the computer program element, wherein the hand-tracking data is output by a hand-tracking system comprising an optical sensor.

### BRIEF DESCRIPTION OF THE DRAWINGS

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.
Figure 1 is a block diagram of a system according to an embodiment of the present invention.
Figure 2 is a block diagram according to an embodiment of the present invention.
Figures 3A and 3B are diagrams of exemplary rules of a fuzzy rule based system for hand gesture recognition and for final feedback to a user.
Figure 4 is a flowchart of an exemplary method in accordance with an exemplary arrangement of the present invention.
Figure 5 is a block diagram of a computer system suitable for the operation of embodiments of the present invention.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

To better understand the solution of the present invention, and specifically the inference process of the invention, it is important to understand fuzzy logic systems and how they can overcome some of the issues of machine learning models.

Fuzzy logic systems are an extension of classical logic whereby instead of determining if an input belongs to a specific set or not, it will assign a degree of membership (i.e., a degree of truth) value between 0 and 1. This membership value describes how strong a link is between an input and a corresponding label. This is a useful approach to handle any uncertainty when classifying numerical values with a label.

In some embodiments of the present invention, fuzzy logic is employed to create fuzzy rule-based systems (FRBS). These are rule-based systems that (i) read numerical information from at least sensor, (ii) map those sensor inputs to linguistic labels and (iii) pass those labels to an inference engine that uses rules with labels to determine a best outcome. This approach has the advantage of being easily interpreted and modified by humans, and, therefore, allows the capture of knowledge from human experts.

Supervised machine learning approaches, on the other hand, require large quantities of labelled data to create a model that learns to predict based on what is in the labelled dataset. The problem is that the "training" or "learning" process is computationally expensive. Additionally, labelling the data is also a costly process - both in terms of resources (the person(s) labelling the data) and time. The approach of the present invention is of a lower resource and time cost when compared to machine learning approaches. The FRBS approach can be built using only expert knowledge which removes the need for labelled data. Additionally, by using linguistic labels rather than numeric values in the FRBS, the human expert can easily transfer their knowledge to an inference engine using words.

In some embodiments of the present invention, a system is configured to provide real-time feedback to a user performing a task (e.g. installation or maintenance tasks), where said user's hand interacts with a single or multiple objects. The interaction can be in a virtual environment, or in a physical environment. In some embodiments, the interaction is in a mixed environment, i.e. an augmented reality environment.

The approach of embodiments of the present invention is the use of multiple fuzzy logic rule-based systems in a hierarchical way. The advantage of a hierarchical architecture is that it modularises the system into understandable components for a human expert and it allows the user to augment knowledge of the system. Additionally, the high level of interpretability of the system's components allows the user to build an inference engine from scratch with expert knowledge rather than labelled datasets. This is an advantage over other black box machine learning approaches that require large amounts of labelled data to create them. Machine learning approaches specifically rely only on what the data shows. If there are scenarios not covered by the dataset, then the ML model will not learn what to do in those situations.

This invention allows experts (such as experts within an organization) to assess manual task completion in real-time using their expert knowledge and know-how without the need for computationally expensive processes.

In one example of the present invention, an input is hand tracking data. It is important to note that the present invention need not implement any particular hand tracking system with the advantage that it can work with any other system or device that does the hand tracking.

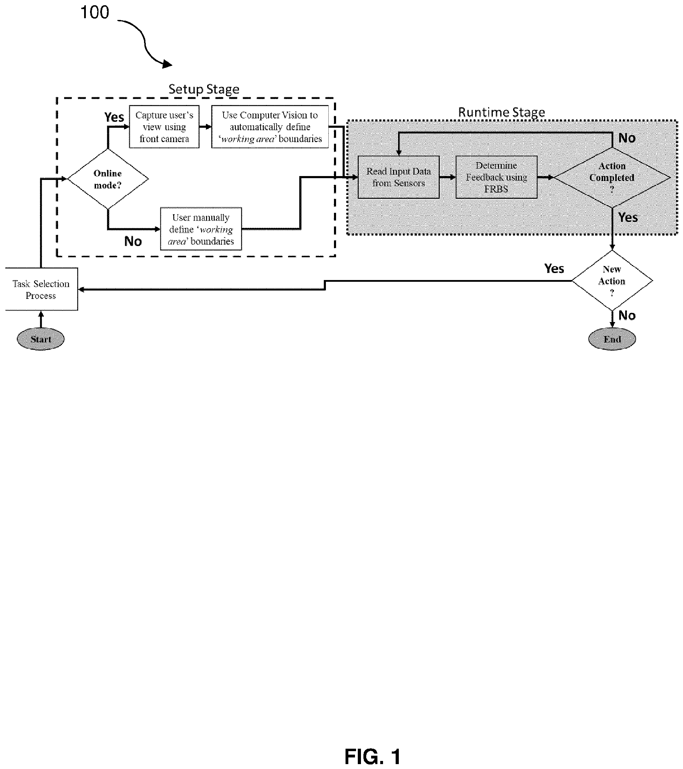

As shown in Fig. 1, the overall process of the system of the present invention can be viewed, in some embodiments, to have two stages: (i) an optional set-up stage 100 and (ii) a runtime stage (Fig. 1). The setup stage serves the purpose of defining parameters and selecting the task that the user will be undertaking, it is a manual process that requires the user to interact with the system's interface. The runtime stage is where the inference process happens to determine what is likely to be the user's subsequent action (e.g. hand action) and if it is correct or not based on the current context.

In one example of the optional set-up stage, input data sources for the setup stage are (a) the task to be evaluated, (b) a working area and (c) hand-tracking information. The first process starts a task selection, i.e. the selected task will be the one evaluated by the system. Then, there is the "working area" definition process which is a manual process where the user defines the boundaries (e.g. 4 boundaries to create a rectangle) of the area where they are going to be performing the task. The working area provides the system with a reference point of where the hand is in a 3-dimensional space. The area can cover a single object to understand if the user is about to grab/touch, for example, the bottom left part of the object, or it can cover a bigger area with multiple objects if selected as such by the user. In some embodiments, it is possible to use deep learning solutions for object detection and image classification to automatically identify the initial working area parameters, e.g., by capturing the user's view using an optical sensor and subsequently applying computer vision to automatically define "working area" boundaries which act as the initial parameters. The disadvantage of a deep learning automated approach in the setup stage is the large amount of resources (such as computational power and labelled data) these models need for training, and the models require such resources for each use-case.

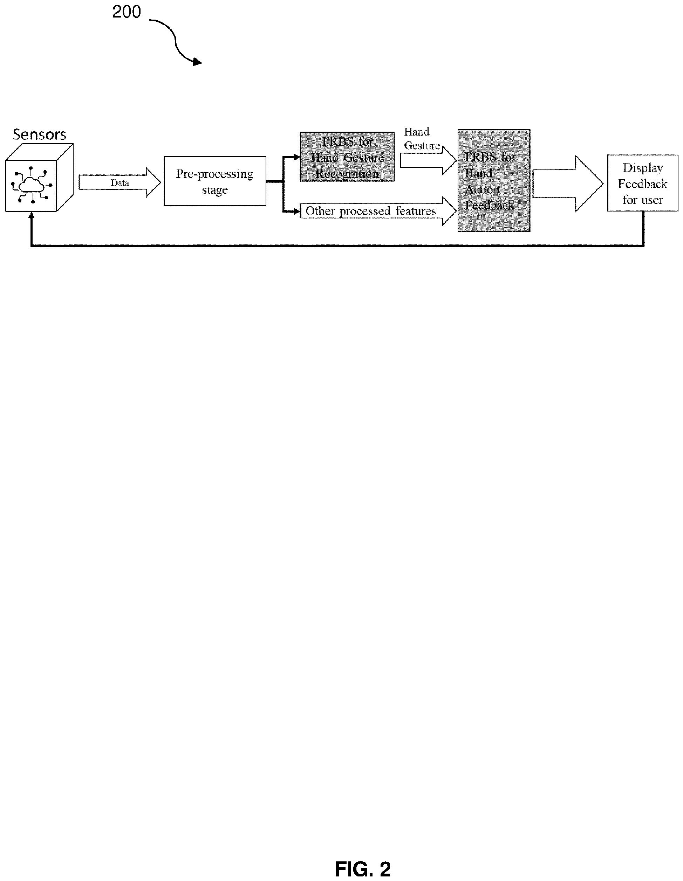

Figure 2 shows a detailed flow chart of an exemplary runtime stage 200 in accordance with an embodiment of the present invention. In this example, the runtime stage includes the inference engine. In some examples, the runtime stage comprises two fuzzy Rule-based Systems (FRBS), a first FRBS to classify hand gestures and a second FRBS to evaluate a hand position within a predefined working area. By separating the inputs into two different FRBSs we reduce the complexity of rules by having fewer antecedents and it allows for users to more easily interpret the system. The second FRBS is informed by a filter that selects only a segment of rules that correspond to the task to be evaluated (said task to be evaluated is determined in the setup stage). Additionally, this hierarchical approach allows the system to include or remove more components depending on the inputs available. For example, if an input sensor captures hand movement trajectory or user gaze, then another FRBS that interprets this information can be added. This will require the last FRBS in the hierarchy (i.e. the one that makes the final feedback decision) will need to be modified to consider a hand movement trajectory FRBS and/or a user gaze FRBS.

In the runtime stage 200, sensors provide the source of the hand-tracking data. The sensors can be an optical sensor, or any other type of sensor which can track at least part of a hand of the user within a predetermined/predefined working area (which may be defined in the setup stage by the user or computer vision). At least some of the data is preprocessed to then be applied to the first and second FRBSs which output feedback for the user. This has the benefit of providing feedback in real-time so that the feedback is preventative as the task is not necessarily complete by the time feedback is received. This enables the user to correct any mistakes identified whilst undertaking the task.

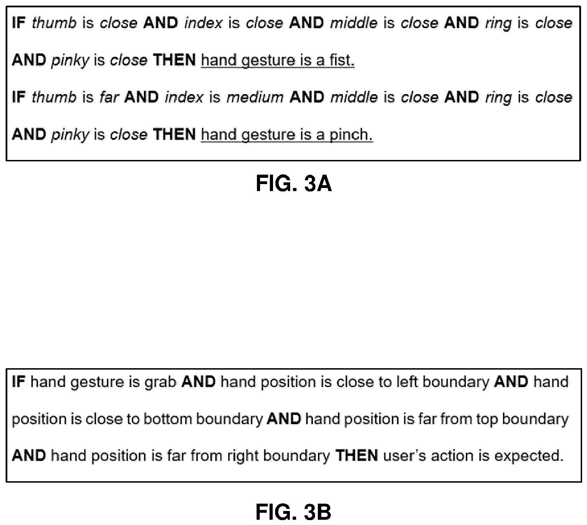

Figures 3A and 3B show example rules for each of the first and second FRBSs, respectively. Figure 3A shows a couple of rules from the first FRBS, the one used for hand gesture recognition. This FRBS rule system determines, for example, whether a hand gesture is a fist, a pinch, a finger-point, etc, based on the relative positioning of a user's fingers.

Figure 3B shows an example of a rule for the second FRBS which is configured for merging the information from all sources and making a decision on what feedback is displayed. This second FRBS rule system determines, for example, the user action that is expected based on the input from the first FRBS and, optionally, other inputs such as the hand position relative to the predefined boundaries. In some embodiments, feedback to the user is represented visually (e.g. using augmented reality) or via voice through a wearable device (e.g. mobile phone).

In some embodiments of the present invention, the fuzzy logic membership functions convert the numeric inputs to linguistic labels that can be interpreted by the rules in the inference engine and by the human experts. The expert users can modify the rules based on experience and share the knowledge with novice users through the system.

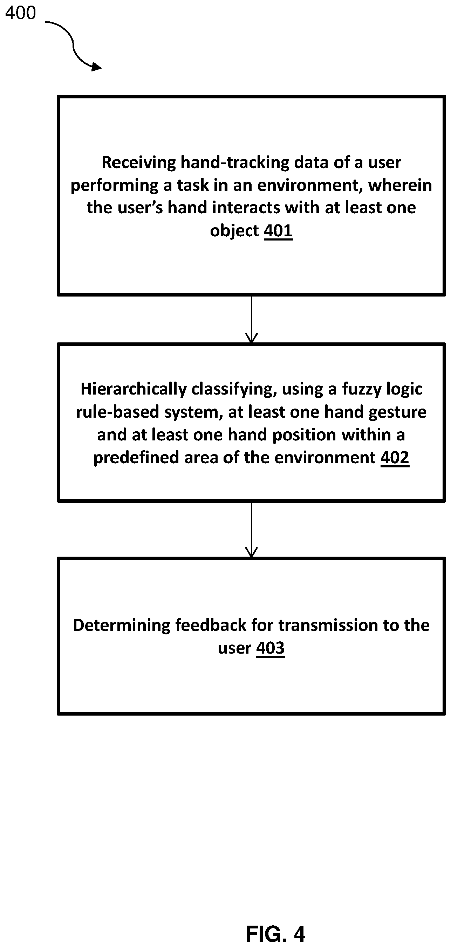

Figure 4 is a flowchart of an exemplary method 400 for providing real-time feedback to a user performing a task. Starting at step 401, hand-tracking data of a user performing a task in an environment is received. The user's hand interacts with at least one object. In some examples, the environment is any one of a physical environment, a virtual environment and a mixed (reality) environment (e.g., a combination of physical and virtual environments). In the case of a virtual environment or a mixed environment, the user may make use of a virtual reality or augmented reality headset, respectively. As a result of the particular environment, the object is a physical object in a physical environment, a virtual object in a virtual environment, or either a physical or virtual object in a mixed environment. In some examples, the hand-tracking data is received from an optical sensor or provided by a separate hand-tracking system.

In step 402, a fuzzy logic rule-based system is used to hierarchically classify at least one hand gesture and at least one hand position within a predefined area of the environment. In some examples, the predefined area of the environment is user-defined. In some other examples, the predefined area of the environment is defined using computer vision.

In step 403, feedback for transmission to the user is determined. The feedback, in some examples is transmitted to the user visually, haptically and/or audibly. This feedback may be provided to the user before the entire task is complete or on completion of the task.

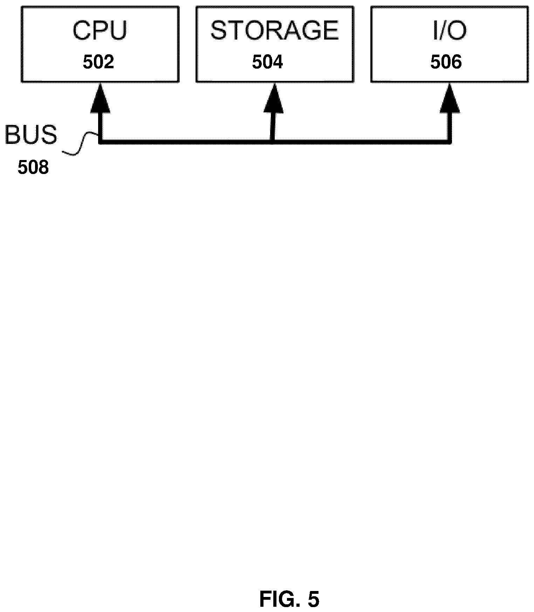

Figure 5 is a block diagram of a computer system suitable for the operation of embodiments of the present invention. In particular logic units as herein described may be implemented as physical or virtual generalised computer systems or dedicated or bespoke processing systems, such as systems configured to execute program code whether software or hardware-encoded such as via stored instructions, firmware or a combination thereof. A central processor unit (CPU) 502 is communicatively connected to a storage 504 and an input/output (I/O) interface 506 via a data bus 508. The storage 504 can be any read/write storage device such as a random-access memory (RAM) or a non-volatile storage device. An example of a non-volatile storage device includes a disk or tape storage device. The I/O interface 506 is an interface to devices for the input or output of data, or for both input and output of data. Examples of I/O devices connectable to I/O interface 506 include a keyboard, a mouse, a display (such as a monitor) and a network connection.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions. Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

## Claims

1. A computer-implemented method for providing real-time feedback to a user performing a task, the method comprising:
receiving hand-tracking data of a user performing a task in an environment, wherein the user's hand interacts with at least one object;
hierarchically classifying, using a fuzzy logic rule-based system, at least one hand gesture and/or hand position within a predefined area of the environment;
based on the classified at least one hand gesture and/or hand position, determining feedback for transmission to the user.

2. The method of claim 1, wherein the environment is a physical environment.

3. The method of claim 1, wherein the environment is a virtual environment.

4. The method of claim 1, wherein the environment is a combination of a physical environment and a virtual environment.

5. The method of any preceding claim, wherein the predefined area of the environment is user-defined.

6. The method of any of claims 1 to 5, wherein the predefined area of the environment is defined using Computer Vision.

7. The method of any of claims 1, 2, 4, 5 or 6, wherein the object is a physical object.

8. The method of any of claims 1, 3, 4, 5 or 6, wherein the object is a virtual object.

9. The method of any preceding claim, wherein determined feedback is transmitted to the user visually, haptically and/or audibly.

10. The method of any preceding claim, wherein the hand-tracking data is output by a hand-tracking system comprising an optical sensor.

11. A computer system including a processor and memory storing computer program code for performing the steps of any preceding claim.

12. A computer program element comprising computer program code to, when loaded into a computer system and executed thereon, cause the computer to perform the steps of a method as claimed in any of claims 1 to 10.
